# EUROPEAN PATENT SPECIFICATION

(11) **EP 1 090 500 B1**
(45) Date of publication and mention of the grant of the patent: **02.11.2006**
(21) Application number: 99935353.5
(22) Date of filing: 26.06.1999
(51) Int. Cl.: H04N 5/445

(54) **TERMINAL POWERED ON FOR EPG DOWNLOAD**
ENDGERÄTSCHALTUNG ZUM HERUNTERLADEN ELEKTRONISCHER PROGRAMMFÜHRER
TERMINAL MIS SOUS TENSION EN VUE DU TELECHARGEMENT D'UN GUIDE ELECTRONIQUE DES PROGRAMMES

(30) Priority: 26.06.1998 US 90805 P
(43) Date of publication of application: 11.04.2001
(73) Proprietor: Index System, Inc., Los Angeles CA 90028 (US)
(72) Inventor: MACRAE, Douglas, B., Weston, MA 02493 (US); O'CONNOR, Daniel, C., Beverly, MA 01915 (US)
(74) Representative: Kinsler, Maureen Catherine
(86) International application number: PCT/US1999/014401
(87) International publication number: WO 2000/001141

(56) References cited:
- EP-A- 0 895 415
- US-A- 5 592 551
- US-A- 5 657 072
- US-A- 5 850 218

## Description

### CROSS-REFERENCE TO RELATED APPLICATION

This application claims priority of U. S. provisional application 60/090.805. filed on June 26, 1998.

### BACKGROUND OF THE INVENTION

This invention relates to the field of television and, more particularly, to a system for the intermittent transmission of data for use in displaying television program guide information or other data.

Television program schedule systems, such as the one disclosed in application Serial No. 08/475.395. receive data transmitted in the vertical blanking interval (VBI) of a TV channel. Typically, the TV receiver must be powered on and tuned to the proper channel for the data to be received by the schedule system. Since transmissions occur during the middle of the day and night, when viewers are not as likely to be watching television, users must leave the system powered on to be sure they receive new data. This method wastes energy and is expensive for the user.

US-A-5657072 discloses an interactive entertainment network system including distribution of a portion of data records prior to peak time.

The invention is set out in the independent claims. Some optional features are set out in the claims dependent thereto.

### SUMMARY OF THE INVENTION

In one aspect, television program data is intermittently downloaded to a plurality of user terminals equipped with a data receiver, a memory for storing television program data, an on-screen electronic program guide generator, a microprocessor, and a television monitor for displaying television programs and an electronic program guide. The data receivers are normally powered off and powered on at regular intervals to receive transmitted program data. The transmitted program data is stored in the memory. The microprocessor is configured to transfer television program data from the memory to the generator in response to user commands and to control the generator to generate a video drive signal representative of an on-screen television program guide. The drive signal is coupled to the generator to the monitor to display the on-screen program guide. Various regimes are employed to turn the tuner on and off.

A feature of the invention is to transmit time correction packets with EPG data so real time clocks in all the user terminals can be synchronized to turn on at the same time for receipt of EPG data.

Another feature of the invention is to transmit instruction packets with the EPG data. One such instruction is to turn the tuner on a designated time to a designated channel. This allows for flexibility in the time and channel of the transmission of the EPG data.

### DESCRIPTION OF THE DRAWINGS

The features of specific embodiments of the best mode contemplated of carrying out the invention are illustrated in the drawings, in which:
FIG. 1 is a diagram of the communications network employed in the transmission of data.
FIG. 2 is system block diagram of a television program guide integrated with typical TV related devices.
FIG. 3 is an illustration of a data transmission packet.
FIG. 4 is an illustration of the header of a data transmission packet in FIG. 3.

### DETAILED DESCRIPTION OF THE INVENTION

In the following embodiments of the invention, reference numerals are used to represent components. If the features of all the embodiments are incorporated into a single system, these components can be shared and perform all the functions of the described embodiments.

### Data Transmission

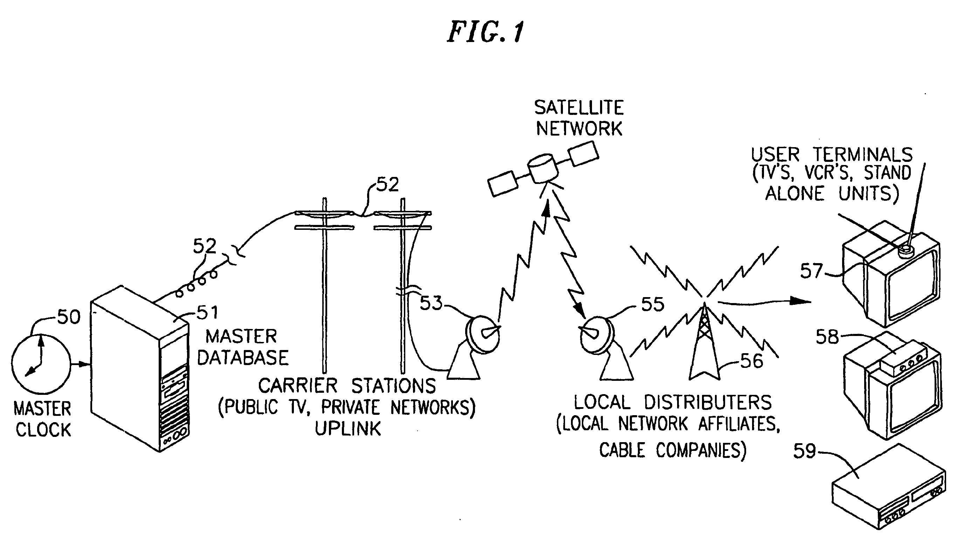

As is seen in figure 1. television schedule data from the master database 51 and master time data from the master clock 50 are sent to carrier channels via a communications circuit 52. Each carrier channel (public television. CNN, NBC, etc.) then transmits the data in the vertical blanking interval (VBI) of their specific broadcast channel. Each carrier channel has a distribution infrastructure in place for their channel, typically consisting of a satellite uplink 53 and a satellite network. The channels are then received by local affiliates and/or local cable companies 55 and telecast 56 to the user's equipment 57, 58 & 59.

In order to receive schedule data the television receiver must be turned on and tuned to the data provider channel. For example, if the data provider channel is channel 7, the television must first be tuned to channel 7 before schedule data can be received.

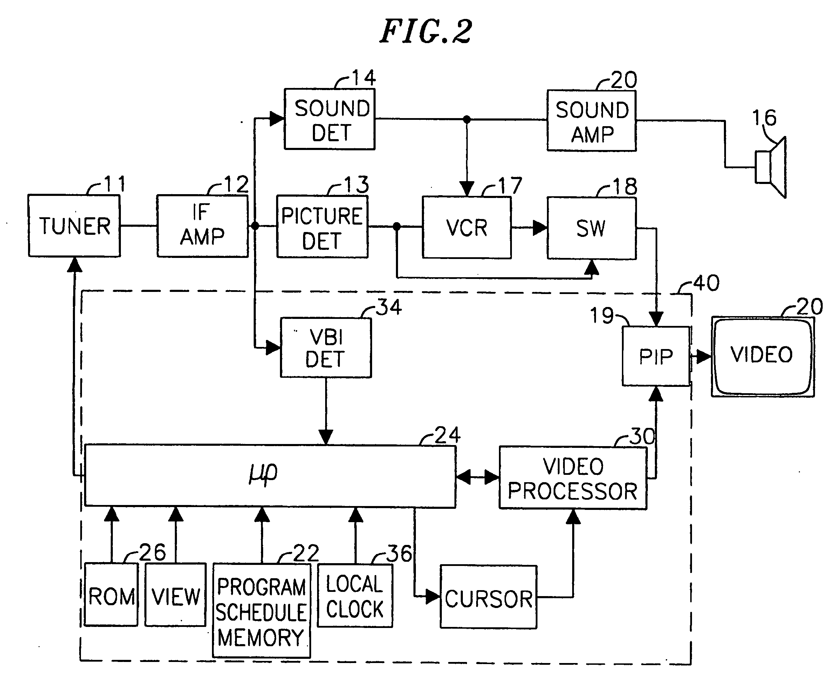

In one embodiment, data is transmitted during the first five minutes of each hour. If the user is not watching TV at this time, the terminal will signal the tuner (figure 2, item 11) to power on and tune to the proper channel. If the user is watching a different channel when the schedule system attempts to download data, or changes channels during the download, the download is skipped. The data transmitted each hour includes instructions to the terminal, targeted data using a filter and database updates. The downloads are spaced one hour apart over a 24-hour period to provide a high probability that during one of those attempts a user will not have the television tuned to another channel. It is unlikely that someone will be watching television at all twenty four of these data downloading intervals.

In an alternate embodiment several additional features could be incorporated, such as: Schedule data updates can occur on an individual basis for each channel. A warning message can be displayed on the screen of the tv monitor after some number of downloads are skipped, informing the user that data may not be available until a download is completed. Each channel provider can supply schedule updates in the VBI signal for that channel. When the user selects a channel for display the schedule system can interrogate the VBI on that channel and receive schedule updates. The database can also be revision controlled, allowing terminals to receive incremental updates of data as needed.

The receiver turn on and turn off times and the channel on which the data is transmitted are stored in ROM: the microprocessor is programmed to process downloaded EPG data, data updates, and instructions, to compare the stored turn on and turn off times with a real time clock, to turn the tuner on or off when the comparison detects a match, and to filter the data that is stored in the program schedule memory

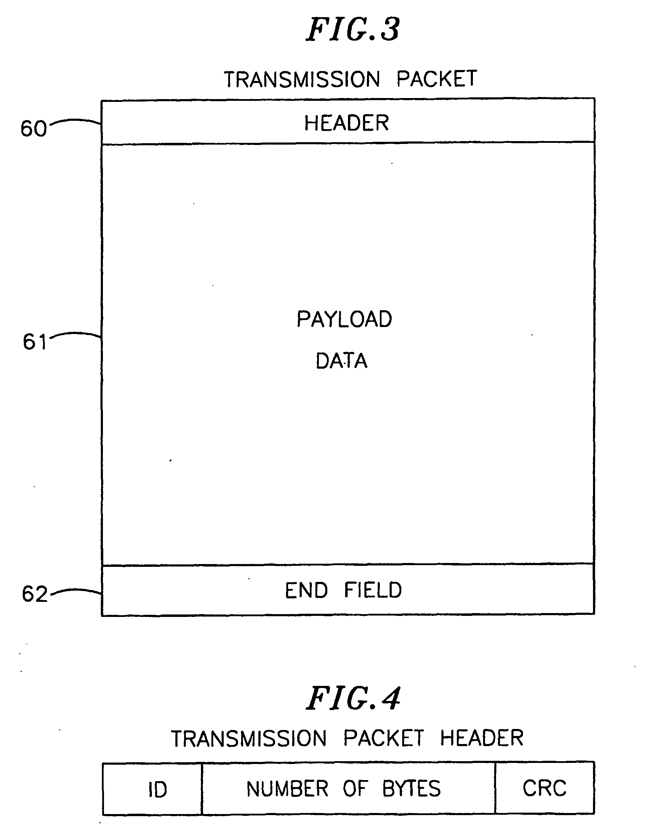

FIG. 3 illustrates a download packet used for the transmission of system data. The packet begins with a packet header 60 containing a packet ID number used to distinguish this packet from other packets. The packet header also contains the number of bytes in the packet and a CRC check bit for error detection.

The packet header is followed by the payload data 61. The payload data contains the information being transmitted to the terminal. In addition to program data (i.e. the database of programing information), various other types of information are contained within the payload data, including: System commands instructions, filters, and time synchronization information.

The packet payload data is followed by the end of packet message 62. This field indicates to the system that the end of the packet has been reached.

After receiving a packet the system checks the CRC to detects any transmission errors, and then extracts the payload data for procession. In the current embodiment the system only receives packets - it has no method of transmitting information. Therefore, any lost or corrupt packets are not resent to the terminal and that data is lost.

In an alternate embodiment, designed to operate with digital television data packets are transmit in a digital data stream with a digital television signal to the terminals.

### System Overview

FIG. 2 describes a system block diagram of a television program guide 40 integrated with typical TV related devices. The primary input source of television signals 10, such as a terrestrial antenna or a cable, is connected to a television tuner 11. The output of tuner 11 is a modulated intermediate frequency signal containing video and audio television information. Tuner 11 is connected by an intermediate frequency amplifier (IF AMP) 12 to a picture detector (PICTURE DET) 13, a sound detector (SOUND DET) 14, and VBI detector (VBI DET) 34 which produce base band video, audio signals and transmitted program data, respectively. The audio signal is coupled by a sound amplifier (SOUND AMP) 15 to a loudspeaker 16. The video signal is coupled by a video amplifier not shown to one input of a switch 18. The VBI signal is coupled to the television program guide microprocessor (µP) 24. The microprocessor is programed to execute the described functions and always remains turned on so it can control the described funcions. Sound detector 14 and picture detector 13 are connected to the audio and video inputs, respectively, of a video cassette recorder (VCR) 17. (Alternatively, television signal source 10 could be directly connected to the RF input of VCR 17, if its internal tuner and demodulating circuitry is to be utilized.) The output of VCR 17 is connected to the other input of switch 18. The output of switch 18 is connected to one input of a conventional picture-in-picture (PIP) integrated circuit chip 19. The output of PIP chip 19 is connected to the video input of a television receiver or monitor (TV) 20 having a screen (not shown).

Master clock 50 periodically sends synchronizing signals to local clocks 36 at the user terminals. Specifically, a data signal representing the current Greenwich Mean Time (GMT) is sent the user terminals and the microprocessor at the user terminals corrects the GMT for a local offset time, which is determined by having the user input the postal zip code where he is located as disclosed in PCT published application WO97/25813. As a result, all the user terminals are in time synchronism with master clock 50. At regular predetermined intervals, data is transmitted from master database 51 on a predetermined channel. If tuner 11 is turned off at a user terminal, microprocessor 24 is programmed to turn on tuner 11 to the predetermined channel at the same time as the data is being transmitted from master database 51 to conserve power. At the end of the data transmission, a data instruction turns off tuner 11. It should be understood that when tuner 11 is turned on and off in accordance with the invention, this includes IF AMP 12 and VBI DET 34, i.e. the other components necessary to recover the data from the television signal. The regularly transmitted data can either be payload data, which is the ultimate data utilized by the user, or instructional data, which tells tuner 11 when to turn on again to receive the ultimate data utilized by the user.

### Processing Data

### Time packets

Each terminal also maintains accurate local time by receiving periodic updates from the master clock 50 in the data stream. Each time an update is received the µP compares the received time with the current time stored in the local clock 36. If there is a difference between the two times, the µP adjusts the local clock to the master clock as needed. The µP can also track trends in the local time correction, and can not only adjust the local clock but the rate at which the clock runs. For example, if the first update requires an time adjust of plus 1 minute the µP first makes the adjustment, and then increases the clock rate by 1/60. After several time updates (iterations) the local clock is very accurate.

So as to limit the amount of data transmitted, a single Universal Time (UT) is telecast to all terminals. This eliminates the need to transmit a different time for each time zone (i.e. EST 1400, CST 1300, PST 1200, etc). During initial set up, each user inputs a time zone offset from UT (i.e. pacific standard time is -7 hours from UT). Each time an update is received the µP adjusts the time to local time by performing the subtraction. Any propagation delay of the time packet is known and would be within the transmission system's tolerance.

### Instructions

Instructions tell the terminal to perform a particular task. In the present embodiment instructions include: go back to sleep - if there is no new data to receive, change to another channel - to receive further instructions and/or data, to wake up at a different time, to receive new data on this channel now, or execute a filter or set of filters.

### Filters

A filter is a set of conditions that are matched, or not matched, based on information stored within each terminal. Conditions could include: The terminal's software version, the zip code where the terminal is located, or even areas of viewer interest (i.e., sports, movies, news, etc). If a filter is matched, then the terminal performs an instruction or selectively grabs data. Filters are used to limit the terminals that perform a specific instruction or grab selected data to fewer than all the television receivers to which the television signals are sent..

### Data

Data is information about programs that air on television. Such data typically includes the channel, time, day, length and specific content of a television program. This data is then stored and sorted to provide the user pertinent information about the programs that air on his television.

The following is one example of how the television receiver can be turned on and off to download data during data transmission sessions assuming that the default data channel for this example is set to channel 17:
- 24:59 pst: The microprocessor 24 checks to see if tuner 11 is on and tuned to channel 17. If not, it sends a command to the tuner to power on and tune to channel 17. If tuner 11 is already turned on to channel 17 because the television receiver is currently in use, it remains on to receive data. If tuner 11 is already turned on to a different channel because the television receiver is currently in use, the download is skipped and the microprocessor sequences a counter to indicate the skipped download. (When the counter reaches a prescribed number, the microprocessor causes the warning message to be displayed on the monitor.)
- 00:01 pst: Tuner 11 being turned on, VBI detector 34 receives a time packet and forwards it to the microprocessor. The microprocessor first sends a command to tuner 11 to power off, then checks the local clock 36, and compares it with the time in the packet. If there is a difference, the microprocessor adjusts the local clock.
- 00:02 pst: Tuner 11 turns back on and the VBI detector receives a filter and instruction packet. The filter is set such that all terminals with zip codes >92800 should tune to channel 29 at 07:35 UT for new data. The instruction packet is forwarded to the microprocessor.
- 00:03 pst: Responsive to the instruction packet, the microprocessor sends a command to tuner 11 to power off. Assuming that the terminal's zip code is set as 92855, the microprocessor also schedules the data download responsive to the instruction packet..
- 00:35 pst: The microprocessor checks to see if tuner 11 is on and tuned to channel 29. If not, it sends a command to the tuner to power on and tune to channel 29. If tuner 11 is already turned on to channel 29 because the television receiver is currently in use, it remains on to receive data. If tuner 11 is already turned on to a different channel because the television receiver is currently in use, the download is skipped and the microprocessor sequences the counter to indicate the skipped download. (When the counter reaches a prescribed number, the microprocessor causes the warning message to be displayed on the monitor.)
- 00:36 pst: The VBI detector receives data packets and forwards them to the microprocessor. Once the last packet is received, the microprocessor sends a command to the tuner to power off.
- 00:59 pst: The described process is repeated at this time and at the same time every hour thereafter.

It should be noted that if no filter is used, tuner 11 starts to receive downloaded data when it is turned back on at 00:02 pst responsive to the instruction packet.

The following is another example of how the television receiver can be turned on and off to download data during data transmission sessions: The instruction packets are transmitted at regular or irregular intervals that are not known to tuner 11. Tuner 11 is periodically turned on for a time period, T¹, that is longer than the time period, T², required to receive an instruction packet. For example if an instruction packet last two seconds, e.g., T' = 2 sec., tuner 11 might be turned on for a time period of 60 seconds, e.g., T² = 60 sec., so it is likely that an instruction packet, if transmitted, overlaps with the time that tuner 11 is turned on. As in the other example, when an instruction packet is received, it is stored and the microprocessor turns on to the designated channel at the designated time to receive the data download. To insure that an instruction packet is received before the EPG data stored in the terminal becomes obsolete or stale, the microprocessor is programmed to shorten successively periods between tuner turn ons until an instruction packet is received. For example, right after reception of an instruction packet, the period between tuner turn ons could be one hour and thereafter could be shortened by five minutes until the next instruction packet is received; thereafter the period between tuner turn ons could be return to one hour and the cycle could be repeated.

The described embodiments of the invention are only considered to be preferred and illustrative of the inventive concept; the scope of the invention is not to be restricted to such embodiment. Various and numerous other arrangements may be devised by one skilled in the art without departing from the spirit and scope of this invention. For example, other regimes could be employed to turn the tuner on and off to reduce power consumption without loss of EPG data. Further, although it is currently preferred to transmit the EPG data with the television signal on a television channel, the EPG data could be transmitted over another data link, such as for example a 930 Mz pager channel. In any case, the data receiver is turned on and off as described above to reduce power consumption.

## Claims

1. A method for intermittently downloading television program data to at least one user terminal equipped with a data receiver, a memory for storing television program data, an electronic program guide generator, a microprocessor, and a display monitor for displaying a television program and an electronic program guide, the method comprising the steps of:
normally powering the data receiver(s) off;
automatically powering the data receiver on to receive an instruction packet, wherein the instructions packet comprises information indicative of a later time for receiving the television program data;
storing the information from the instructions packet in the memory;
controlling the data receiver to receive the television program data at the later time, in response to the information comprised in the instructions packet;
storing the television program data in the memory;
transferring the television program data from the memory to the electronic program guide generator in response to a user command;
controlling the electronic program guide generator to generate a video drive signal representative of an electronic program guide; and
coupling the electronic program guide generator to the display monitor to display the electronic program guide.

2. The method defined in claim 1 further comprising:
automatically powering the data receiver off after receiving the instruction packet;
automatically powering the data receiver on before receiving the television program data at the later time; and
automatically powering the data receiver off after receiving the television program data at the later time.

3. The method defined in claim 1 further comprising:
controlling the data receiver to further receive a filter packet associated with at least one of the instruction packet and the television program data, the filter packet comprising filter information specifying at least one characteristic of at least one user terminal; and
performing the storing of at least one of the information associated with the instruction packet and the television program data in the memory when the filter information matches the user terminal.

4. The method defined in claim 3 wherein the at least one characteristic comprises at least one of a software version of the user terminal, a zip code of the user terminal, and an area of interest by a viewer using the user terminal.

5. The method defined in claim 1 wherein at least one of the instruction packet and the television program data is received in at least one of a digital data stream, a data link separate from a television signal input source on which television signals are provided to the user terminal, a vertical blanking interval, and a television signal associated with a particular television channel with which the instruction packet or the television program data directly corresponds.

6. The method defined in claim 1 wherein only a portion of the television program data that is not already stored in the user terminal is stored in the memory.

7. The method defined in claim 1 further comprising automatically powering the data receiver on to receive a second instruction packet, wherein the second instruction packet comprises second time information that instructs the user terminal to receive the instruction packet with the information at a later second time.

8. The method defined in claim 1 further comprising:
preventing the data receiver from receiving at least one of the instruction packet and the television program data when the data receiver is already powered on and tuned to a channel other than the channel that is associated with the television program data;
incrementing a counter value in response to the preventing the data receiver from receiving the at least one of the instruction packet and the television program data; and
causing a warning message to be displayed on the display monitor when the counter value reaches a predetermined number.

9. The method defined in claim 1 further comprising:
controlling the data receiver to receive a time packet that comprises a global clock time; and
synchronizing a clock at the user terminal to the global clock time.

10. The method defined in claim 1 wherein the television program data comprises at least one of channel, time, day, length, and content information of at least one television program.

11. The method defined in claim 1 further comprising automatically powering the data receiver on to receive the instruction packet at a predetermined time.

12. The method defined in claim 1 further comprising automatically and intermittently powering the data receiver on for a first duration of time that is longer than a second duration of time corresponding to the length of time in which the instruction packet is transmitted in order to receive the instruction packet, wherein the length of time between powering the data receiver on is set at a starting value, successively decreased until the instruction packet is received, and subsequently reset to the starting value.

13. A system for intermittently downloading television program data to at least one user terminal comprising:
a data receiver that is normally powered off;
a memory;
an electronic program guide generator;
a display monitor; and
a microprocessor coupled to the data receiver, the memory, the electronic program guide generator and the display monitor, wherein the microprocessor is operative to:
automatically power the data receiver on to receive an instruction packet, wherein the instruction packet comprises information indicative of a later time for receiving television program data, in response to the information comprised in the instructions packet;
store the information from the instruction packet in the memory;
control the data receiver to receive the television program data at the later time;
store the television program data in the memory;
transfer the television program data from the memory to the electronic program guide generator in response to a user command; and
control the electronic program guide generator to generate an electronic program guide based on the television program data for display on the display monitor.

14. The system defined in claim 13 wherein the microprocessor is further operative to:
automatically power the data receiver off after receiving the instruction packet;
automatically power the data receiver on before receiving the television program data at the later time; and
automatically power the data receiver off after receiving the television program data at the later time.

15. The system defined in claim 13 wherein the microprocessor is further operative to:
control the data receiver to further receive a filter packet associated with at least one of the instruction packet and the television program data, the filter packet comprising filter information specifying at least one characteristic of at least one user terminal; and
perform the storing of at least one of the information associated with the instruction packet and the television program data when the filter information matches the user terminal.

16. The system defined in claim 15 wherein the at least one characteristic comprises at least one of a software version of the user terminal, a zip code of the user terminal, and an area of interest by a viewer using the user terminal.

17. The system defined in claim 13 wherein at least one of the instruction packet and the television program data is received in at least one of a digital data stream, a data link separate from a television signal input source on which television signals are provided to the user terminal, a vertical blanking interval, and a television signal associated with a particular television channel with which the instruction packet or the television program data directly corresponds.

18. The system defined in claim 13 wherein only a portion of the television program data that is not already stored in the user terminal is stored in the memory.

19. The system defined in claim 13 wherein the microprocessor is further operative to automatically power the data receiver on to receive a second instruction packet, wherein the second instruction packet comprises second time information that instructs the user terminal to receive the instruction packet with the information at a later second time.

20. The system defined in claim 13 wherein the microprocessor is further operative to:
prevent the data receiver from receiving at least one of the instruction packet and the television program data when the data receiver is already powered on and tuned to a channel other than the channel that is associated with the television program data;
increment a counter value in response to preventing the data receiver from receiving the at least one of the instruction packet and the television program data; and
cause a warning message to be displayed on the display monitor when the counter value reaches a predetermined number.

21. The system defined in claim 13 wherein the microprocessor is further operative to:
control the data receiver to receive a time packet that comprises a global clock time; and
synchronize a clock at the user terminal to the global clock time.

22. The system defined in claim 13 wherein the television program data comprises at least one of channel, time, day, length, and content information of at least one television program.

23. The system defined in claim 13 wherein the microprocessor is further operative to automatically power the data receiver on to receive the instruction packet at a predetermined time.

24. The system defined in claim 13 wherein the microprocessor is further operative to automatically and intermittently power the data receiver on for a first duration of time that is longer than a second duration of time corresponding to the length of time in which the instruction packet is transmitted in order to receive the instruction packet, wherein the length of time between powering the data receiver on is set at a starting value, successively decreased until the instruction packet is received, and subsequently reset to the starting value.

## Patentansprüche

1. Verfahren für das intermittierende Herunterladen von Fernsehprogrammdaten auf zumindest einen Benutzerterminal, der mit einem Datenempfänger, einem Speicher für das Speichern der Fernsehprogrammdaten, einem elektronischen Programmführergenerator, einem Mikroprozessor, und einem Anzeigebildschirm für das Anzeigen eines Fernsehprogramms und einem elektronischen Programmführer ausgestattet ist, wobei das Verfahren die Schritte aufweist:
Normales Ausschalten des(r) Datenempfänger(s);
Automatisches Einschalten des Datenempfängers, um ein Instruktionspaket zu empfangen, wobei das Instruktionspaket Informationen aufweist, welche indikativ für eine spätere Zeit für das Empfangen der Fernsehprogrammdaten sind;
Speichern der Information des Instruktionspakets in dem Speicher;
Steuern des Datenempfängers, um die Fernsehprogrammdaten zu einem späteren Zeitpunkt als Antwort auf die Information, die im Instruktionspaket enthalten ist, zu empfangen;
Speichern der Fernsehprogrammdaten im Speicher;
Übertragen der Fernsehprogrammdaten vom Speicher auf den elektronischen Programmführergenerator als Antwort auf einen Benutzerbefehl;
Steuern des elektronischen Programmführererzeugers, um ein Video-Ansteuerungssignal, welches für einen elektronischen Programmführer repräsentativ ist, zu erzeugen; und
Koppeln des elektronischen Programmführergenerators an den Anzeigebildschirm, um den elektronischen Programmführer anzuzeigen.

2. Verfahren nach Anspruch 1, welches weiters aufweist:
Automatisches Ausschalten des Datenempfängers nach dem Empfangen des Instruktionspaketes;
Automatisches Einschalten des Datenempfängers vor dem Empfangen der Fernsehprogrammdaten zu dem späteren Zeitpunkt; und
Automatisches Ausschalten des Datenempfängers nach dem Empfangen der Fernsehprogrammdaten zu dem späteren Zeitpunkt.

3. Verfahren nach Anspruch 1, welches weiters aufweist:
Steuern des Datenempfängers, um weiters ein Filterpaket zu empfangen, welches mit zumindest einem Instruktionspaket und den Fernsehprogrammdaten assoziiert ist, wobei das Filterpaket Filterinformationen enthält, welche zumindest ein Charakteristikum von zumindest einem Benutzerterminal spezifiziert; und
Ausführen der Speicherung der zumindest einen Information, die mit dem Instruktionspaket und den Fernsehprogrammdaten assoziiert ist, im Speicher, wenn die Filterinformation mit dem Benutzerterminal übereinstimmt.

4. Verfahren nach Anspruch 3, wobei das zumindest eine Charakteristikum zumindest eine Software-Version des Benutzerterminals, eine Postleitzahl des Benutzerterminals, und einen Interessensbereich des Zuschauers, der den Benutzerterminal verwendet, aufweist.

5. Verfahren nach Anspruch 1, wobei zumindest ein Instruktionspaket und die Fernsehprogrammdaten in zumindest einem von digitalen Datenstrom, einer von der Fernsehsignaleingangsquelle getrennten Datenleitung, auf welcher Fernsehsignale dem Benutzerterminal zur Verfügung gestellt werden, einer vertikalen Austastlücke, und einem Fernsehsignal, welches mit einem bestimmten Fernsehkanal assoziiert ist, mit welchem das Instruktionspaket oder die Fernsehprogrammdaten direkt korrespondieren, empfangen wird.

6. Verfahren nach Anspruch 1, wobei nur ein Teil der Fernsehprogrammdaten, der noch nicht bereits im Benutzerterminal gespeichert ist, im Speicher gespeichert wird.

7. Verfahren nach Anspruch 1, welches weiters das automatische Einschalten des Datenempfängers aufweist, um ein zweites Instruktionspaket zu empfangen, wobei das zweite Instruktionspaket eine zweite Zeitinformation enthält, die das Benutzerterminal anweist, das Instruktionspaket mit der Information zu einer späteren, zweiten Zeit zu empfangen.

8. Verfahren nach Anspruch 1, welches weiters aufweist:
Verhindern, dass der Datenempfänger zumindest eines von dem Instruktionspaket und den Fernsehprogrammdaten empfängt, wenn der Datenempfänger bereits eingeschaltet ist und auf einen Kanal eingestellt ist, der von dem mit den Fernsehprogrammdaten assoziierten Kanal abweicht;
Erhöhen eines Zählwertes als Antwort auf das Hindern des Datenempfängers am Empfangen des zumindest einen von dem Instruktionspaket und den Fernsehprogrammdaten; und
Bewirken einer am Anzeigebildschirm anzuzeigenden Warnmitteilung, wenn der Zählwert eine vorbestimmte Zahl erreicht.

9. Verfahren nach Anspruch 1, welches weiters aufweist:
Steuern des Datenempfängers, um ein Zeitpaket zu empfangen, das eine globale Uhrzeit ausweist; und
Synchronisieren einer Uhr am Benutzerterminal auf die globale Uhrzeit.

10. Verfahren nach Anspruch 1, wobei die Fernsehprogrammdaten zumindest eines von Kanal, Zeit, Tag, Länge, und Inhaltsinformation des zumindest einen Fernsehprogramms aufweist.

11. Verfahren nach Anspruch 2, welches weiters das automatische Einschalten des Datenempfängers aufweist, um das Instruktionspaket an einer vorbestimmten Zeit zu empfangen.

12. Verfahren nach Anspruch 1, welches das automatische und intermittierende Einschalten des Datenempfängers für eine erste Zeitdauer aufweist, die länger als eine zweite Zeitdauer ist, die der Dauer entspricht, in welcher das Instruktionspaket übertragen wird, um das Instruktionspaket zu empfangen, wobei die Dauer zwischen dem Einschalten des Datenempfängers auf einen Anfangswert gesetzt wird, der sukzessive abnimmt, bis das Instruktionspaket empfangen ist, und im Anschluss daran auf den Anfangswert rückgestellt wird.

13. System für das periodische Herunterladen von Fernsehprogrammdaten auf zumindest einen Benutzerterminal, welches aufweist:
einen Datenempfänger, der normalerweise ausgeschalten ist;
einen Speicher;
einen elektronischen Programmführergenerator;
einen Anzeigebildschirm; und
einen Mikroprozessor, der an den Datenempfänger, den Speicher, den elektronischen Prograinmführergenerator und den Anzeigebildschirm gekoppelt ist, wobei der Mikroprozessor wirksam ist, um
den Datenempfänger automatisch einzuschalten, um ein Instruktionspaket zu empfangen, wobei das Instruktionspaket Informationen aufweist, welche indikativ für eine spätere Zeit für das Empfangen der Fernsehprogrammdaten sind, in Reaktion auf die im Instruktionspaket enthaltende Information;
die Information des Instruktionspakets in dem Speicher zu speichern;
den Datenempfänger zu steuern, um die Fernsehprogrammdaten zu einem späteren Zeitpunkt als Antwort auf die Information, die im Instruktionspaket enthalten ist, zu empfangen;
die Fernsehprogrammdaten im Speicher zu speichern;
die Fernsehprogrammdaten vom Speicher auf den elektronischen Programmführergenerator als Antwort auf einen Benutzerbefehl zu übertragen; und
den elektronischen Programmführergenerator zu steuern, um ein Video-Ansteuerungssignal, welches für einen elektronischen Programmführer repräsentativ ist, zu erzeugen; und
den elektronischen Programmführungserzeuger zu steuern, um einen auf den Fernsehprogrammdaten basierenden elektronischen Programmführer für die Anzeige auf einem Anzeigebildschirm zu erzeugen.

14. System nach Anspruch 13, wobei der Mikroprozesser weiters wirksam ist, um
den Datenempfänger automatisch auszuschalten, nachdem das Instruktionspaket empfangen wurde;
den Datenempfänger automatisch einzuschalten, bevor die Fernsehprogrammdaten zu einem späteren Zeitpunkt empfangen werden, und
den Datenempfänger automatisch auszuschalten, nachdem die Fernsehprogrammdaten zu einem späteren Zeitpunkt empfangen wurden.

15. System nach Anspruch 13, wobei der Mikroprozessor weiters wirksam ist, um
den Datenempfänger zu steuern, um weiters ein Filterpaket zu empfangen, welches mit zumindest einem Instruktionspaket und den Fernsehprogrammdaten assoziiert ist, wobei das Filterpaket Filterinformationen enthält, welche zumindest ein Charakteristikum von zumindest einem Benutzerterminal spezifiziert; und
die Speicherung der zumindest einen Information auszuführen, die mit dem Instruktionspaket und den Fernsehprogrammdaten assoziiert ist, wenn die Filterinformation mit dem Benutzerterminal übereinstimmt.

16. System nach Anspruch 15, wobei das zumindest eine Charakteristikum zumindest eine Software-Version des Benutzerterminals, eine Postleitzahl des Benutzerterminals, und einen Interessensbereich des Zuschauers, der den Benutzerterminal verwendet, aufweist.

17. System nach Anspruch 13, wobei zumindest ein Instruktionspaket und die Fernsehprogrammdaten in zumindest einem vom digitalen Datenstrom, einer von der Fernsehsignaleingangsquelle getrennten Datenleitung, auf welcher Fernsehsignale dem Benutzerterminal zur Verfügung gestellt werden, einer vertikale Austastlücke, und einem Fernsehsignal, welches mit einem bestimmten Fernsehkanal assoziiert ist, mit welchem das Instruktionspaket oder die Fernsehprogrammdaten direkt korrespondieren, empfangen wird.

18. System nach Anspruch 13, wobei nur ein Teil der Fernsehprogrammdaten, der noch nicht bereits im Benutzerterminal gespeichert ist, wird im Speicher gespeichert.

19. System nach Anspruch 13, wobei der Mikroprozessor weiters wirksam ist, um den Datenempfängers automatisch einzuschalten, um ein zweites Instruktionspaket zu empfangen, wobei das zweite Instruktionspaket eine zweite Zeitinformation enthält, die den Benutzerterminal anweist, das Instruktionspaket mit der Information zu einer späteren, zweiten Zeit zu empfangen.

20. System nach Anspruch 13, wobei der Mikroprozessor weiters wirksam ist, um:
zu verhindern, dass der Datenempfänger zumindest eines von dem Instruktionspaket und den Fernsehprogrammdaten empfängt, wenn der Datenempfänger bereits eingeschaltet ist und auf einen Kanal eingestellt ist, der von dem mit den Fernsehprogrammdaten assoziierten Kanal abweicht;
einen Zählwert als Antwort auf das Verhindern des Datenempfängers vom Empfangen des zumindest einen von dem Instruktionspaket und den Fernsehprogrammdaten zu erhöhen; und
zu bewirken, dass eine Warnmitteilung am Anzeigebildschirm angezeigt wird, wenn der Zählwert eine vorbestimmte Zahl erreicht.

21. System nach Anspruch 13, wobei der Mikroprozessor weiters wirksam ist, um:
den Datenempfänger zu steuern, um ein Zeitpaket zu empfangen, das eine globale Uhrzeit ausweist; und
eine Uhr am Benutzerterminal auf die globale Uhrzeit zu synchronisieren.

22. System nach Anspruch 13, wobei die Fernsehprogrammdaten zumindest eines von Kanal, Zeit, Tag, Länge, und Inhaltsinformation des zumindest einen Fernsehprogramms aufweist.

23. System nach Anspruch 13, wobei der Mikroprozessor weiters wirksam ist, den Datenempfänger automatisch einzuschalten, um das Instruktionspaket an einer vorbestimmten Zeit zu empfangen.

24. System nach Anspruch 13, wobei der Mikroprozessor weiters wirksam ist, um den Datenempfänger automatisch und intermittierend für eine erste Zeitdauer einzuschalten, die länger als eine zweite Zeitdauer ist, die der Dauer entspricht, in welcher das Instruktionspaket übertragen wird, um das Instruktionspaket zu empfangen, wobei die Dauer zwischen dem Einschalten des Datenempfängers auf einen Anfangswert gesetzt wird, der sukzessive abnimmt, bis das Instruktionspaket empfangen ist, und im Anschluss daran auf den Anfangswert rückgestellt wird.

## Revendications

1. Procédé permettant de télécharger de manière intermittente des données concernant des programmes de télévision vers au moins un terminal utilisateur équipé d'un récepteur de données, d'une mémoire dans laquelle sont stockées des données concernant des programmes de télévision, d'un générateur de guide électronique de programmes, d'un microprocesseur et d'un moniteur pour afficher un programme de télévision et un guide électronique de programmes, le procédé comprenant les étapes suivantes :
la mise hors tension normale du (des) récepteur(s) de données;
la mise sous tension automatique du récepteur de données pour recevoir un paquet d'instructions, dans lequel le paquet d'instructions comprend des informations indicatives d'une heure ultérieure pour recevoir les données concernant les programmes de télévision;
le stockage des informations du paquet d'instructions dans la mémoire;
le fait de commander au récepteur de données de recevoir les données concernant les programmes de télévision à l'heure ultérieure, en réponse aux informations comprises dans le paquet d'instructions;
le stockage des données concernant les programmes de télévision dans la mémoire;
le transfert des données concernant les programmes de télévision de la mémoire vers le générateur de guide électronique de programmes en réponse à une commande utilisateur;
le fait de commander au générateur de guide électronique de programmes de générer un signal d'attaque vidéo représentatif d'un guide électronique de programmes, et
la connexion du générateur de guide électronique de programmes au moniteur pour afficher le guide électronique de programmes.

2. Procédé suivant la revendication 1 comprenant en outre :
la mise hors tension automatique du récepteur de données après la réception du paquet d'instructions;
la mise sous tension automatique du récepteur de données avant la réception des données concernant les programmes de télévision à l'heure ultérieure, et
la mise hors tension automatique du récepteur de données après la réception des données concernant les programmes de télévision à l'heure ultérieure.

3. Procédé suivant la revendication 1 comprenant en outre :
le fait de commander au récepteur de données de recevoir, en outre, un paquet de filtres associé au paquet d'instructions et/ou aux données concernant les programmes de télévision, le paquet de filtres comprenant des informations sur les filtres spécifiant au moins une caractéristique d'au moins un terminal utilisateur, et
l'exécution du stockage des informations associées au paquet d'instructions et/ou des données concernant les programmes de télévision dans la mémoire lorsque les informations sur les filtres correspondent au terminal utilisateur.

4. Procédé suivant la revendication 3 dans lequel la au moins une caractéristique comprend une version logicielle du terminal utilisateur, un code postal du terminal utilisateur et/ou un centre d'intérêt du téléspectateur utilisant le terminal utilisateur.

5. Procédé suivant la revendication 1 dans lequel le paquet d'instructions et/ou les données concernant les programmes de télévision sont reçus dans un flux de données numérique, une liaison de données séparée d'une source d'entrée de signal de télévision par laquelle les signaux de télévision sont fournis au terminal utilisateur, un intervalle de suppression verticale et/ou un signal de télévision associé à un canal de télévision particulier auquel le paquet d'instructions ou les données concernant les programmes de télévision correspondent directement.

6. Procédé suivant la revendication 1 dans lequel une partie seulement des données concernant les programmes de télévision qui ne sont pas déjà stockées dans le terminal utilisateur est stockée dans la mémoire.

7. Procédé suivant la revendication 1 comprenant en outre la mise sous tension automatique du récepteur de données pour recevoir un deuxième paquet d'instructions, dans lequel le deuxième paquet d'instructions comprend des informations concernant une deuxième heure qui enjoignent au terminal utilisateur de recevoir le paquet d'instructions avec les informations à une deuxième heure ultérieure.

8. Procédé suivant la revendication 1 comprenant en outre :
le fait d'empêcher le récepteur de données de recevoir le paquet d'instructions et/ou les données concernant les programmes de télévision lorsque le récepteur de données est déjà sous tension et accordé sur un autre canal que le canal qui est associé aux données concernant les programmes de télévision;
l'incrémentation d'une valeur de compteur en réponse au fait d'empêcher le récepteur de données de recevoir le paquet d'instructions et/ou les données concernant les programmes de télévision, et
le fait d'amener un message d'avertissement à être affiché sur le moniteur lorsque la valeur de compteur atteint un nombre prédéterminé.

9. Procédé suivant la revendication 1 comprenant en outre :
le fait de commander au récepteur de données de recevoir un paquet temporel qui comprend une heure d'horloge globale, et
la synchronisation d'une horloge située au niveau du terminal utilisateur sur l'heure d'horloge globale.

10. Procédé suivant la revendication 1 dans lequel les données concernant les programmes de télévision comprennent un canal, une heure, un jour, une durée et/ou des informations sur le contenu d'au moins un programme de télévision.

11. Procédé suivant la revendication 1 comprenant en outre la mise sous tension automatique du récepteur de données pour recevoir le paquet d'instructions à une heure prédéterminée.

12. Procédé suivant la revendication 1 comprenant en outre la mise sous tension automatique et intermittente du récepteur de données pendant une première période de temps qui est supérieure à une deuxième période de temps correspondant au laps de temps pendant lequel le paquet d'instructions est transmis afin de recevoir le paquet d'instructions, dans lequel le laps de temps entre la mise sous tension du récepteur de données est fixé à une valeur de départ, diminué successivement jusqu'à ce que le paquet d'instructions soit reçu et remis ensuite à la valeur de départ.

13. Système permettant de télécharger de manière intermittente des données concernant des programmes de télévision vers au moins un terminal utilisateur comprenant :
un récepteur de données qui est normalement mis hors tension;
une mémoire;
un générateur de guide électronique de programmes;
un moniteur, et
un microprocesseur connecté au récepteur de données, à la mémoire, au générateur de guide électronique de programmes et au moniteur, dans lequel le microprocesseur sert à :
mettre automatiquement sous tension le récepteur de données pour recevoir un paquet d'instructions, dans lequel le paquet d'instructions comprend des informations indicatives d'une heure ultérieure pour recevoir les données concernant les programmes de télévision, en réponse aux informations comprises dans le paquet d'instructions;
stocker les informations du paquet d'instructions dans la mémoire;
commander au récepteur de données de recevoir les données concernant les programmes de télévision à l'heure ultérieure;
stocker les données concernant les programmes de télévision dans la mémoire;
transférer les données concernant les programmes de télévision de la mémoire vers le générateur de guide électronique de programmes en réponse à une commande utilisateur, et
commander au générateur de guide électronique de programmes de générer un guide électronique de programmes sur la base des données concernant les programmes de télévision en vue de leur affichage sur le moniteur.

14. Système suivant la revendication 13 dans lequel le microprocesseur sert en outre à :
mettre automatiquement hors tension le récepteur de données après la réception du paquet d'instructions;
mettre automatiquement sous tension le récepteur de données avant la réception des données concernant les programmes de télévision à l'heure ultérieure, et
mettre automatiquement hors tension le récepteur de données après la réception des données concernant les programmes de télévision à l'heure ultérieure.

15. Système suivant la revendication 13 dans lequel le microprocesseur sert en outre à :
commander au récepteur de données de recevoir, en outre, un paquet de filtres associé au paquet d'instructions et/ou aux données concernant les programmes de télévision, le paquet de filtres comprenant des informations sur les filtres spécifiant au moins une caractéristique d'au moins un terminal utilisateur, et
exécuter le stockage des informations associées au paquet d'instructions et/ou des données concernant les programmes de télévision lorsque les informations sur les filtres correspondent au terminal utilisateur.

16. Système suivant la revendication 15 dans lequel la au moins une caractéristique comprend une version logicielle du terminal utilisateur, un code postal du terminal utilisateur et/ou un centre d'intérêt du téléspectateur utilisant le terminal utilisateur.

17. Système suivant la revendication 13 dans lequel le paquet d'instructions et/ou les données concernant les programmes de télévision sont reçus dans un flux de données numérique, une liaison de données séparée d'une source d'entrée de signal de télévision par laquelle les signaux de télévision sont fournis au terminal utilisateur, un intervalle de suppression verticale et/ou un signal de télévision associé à un canal de télévision particulier auquel le paquet d'instructions ou les données concernant les programmes de télévision correspondent directement.

18. Système suivant la revendication 13 dans lequel une partie seulement des données concernant les programmes de télévision qui ne sont pas déjà stockées dans le terminal utilisateur est stockée dans la mémoire.

19. Système suivant la revendication 13 dans lequel le microprocesseur sert en outre à mettre automatiquement sous tension le récepteur de données pour recevoir un deuxième paquet d'instructions, dans lequel le deuxième paquet d'instructions comprend des informations concernant une deuxième heure qui enjoignent au terminal utilisateur de recevoir le paquet d'instructions avec les informations à une deuxième heure ultérieure.

20. Système suivant la revendication 13 dans lequel le microprocesseur sert en outre à :
empêcher le récepteur de données de recevoir le paquet d'instructions et/ou les données concernant les programmes de télévision lorsque le récepteur de données est déjà sous tension et accordé sur un autre canal que le canal qui est associé aux données concernant les programmes de télévision;
incrémenter une valeur de compteur en réponse au fait d'empêcher le récepteur de données de recevoir le paquet d'instructions et/ou les données concernant les programmes de télévision, et
amener un message d'avertissement à être affiché sur le moniteur lorsque la valeur de compteur atteint un nombre prédéterminé.

21. Système suivant la revendication 13 dans lequel le microprocesseur sert en outre à :
commander au récepteur de données de recevoir un paquet temporel qui comprend une heure d'horloge globale, et
synchroniser une horloge située au niveau du terminal utilisateur sur l'heure d'horloge globale.

22. Système suivant la revendication 13 dans lequel les données concernant les programmes de télévision comprennent un canal, une heure, un jour, une durée et/ou des informations sur le contenu d'au moins un programme de télévision.

23. Système suivant la revendication 13 dans lequel le microprocesseur sert en outre à mettre automatiquement sous tension le récepteur de données pour recevoir le paquet d'instructions à une heure prédéterminée.

24. Système suivant la revendication 13 dans lequel le microprocesseur sert en outre à mettre automatiquement et de manière intermittente sous tension le récepteur de données pendant une première période de temps qui est supérieure à une deuxième période de temps correspondant au laps de temps pendant lequel le paquet d'instructions est transmis afin de recevoir le paquet d'instructions, dans lequel le laps de temps entre la mise sous tension du récepteur de données est fixé à une valeur de départ, diminué successivement jusqu'à ce que le paquet d'instructions soit reçu et remis ensuite à la valeur de départ.
